# EUROPEAN PATENT APPLICATION

(11) **EP 2 159 100 A1**
(43) Date of publication of application: **03.03.2010**
(21) Application number: 09168965.3
(22) Date of filing: 28.08.2009
(51) Int. Cl.: B60P 1/46, B60P 1/44

(54) **Lifting apparatus for use in a vehicle**

(30) Priority: 29.08.2008 NL 2001941
(71) Applicant: Houtveen Beheer Achterveld B.V., 3791 PH Achterveld (NL)
(72) Inventor: Houtveen, Timotheus Gregorius Hendrikus, 3791 PH Achterveld (NL); Knol, Albert, 3791 PH Achterveld (NL)
(74) Representative: Ketelaars, Maarten F.J.M.

(57) **Abstract**

The invention relates to a lifting apparatus for use in a transport vehicle to lift a load at a height of a loading space of the vehicle, wherein the lifting apparatus comprises:
- a guide member (9) provided with rails, wherein a movable displacement unit (3) is mounted,
- a rack of a rack-and-pinion (16) arrangement provided within the guide section and wherein the rack-and-pinion arrangement engages with the displacement unit,
- a carrier section (4) that extends along a main axis and wherein said carrier section is connected at its first end to the displacement unit,
- a positioning surface (2) connected to an opposite end of the carrier section (4) to position a load for lifting
a force compensator which exerts a force on the carrier section, essentially in the direction of the longitudinal axis thereof in order to bear at least a portion of the weight load.

## Description

### FIELD OF THE INVENTION

The invention relates to a lifting apparatus for a transport vehicle used to lift a load up to the height of a loading space of the vehicle.

The invention further relates to an extruded profile, made suitable for and intended as a guide section for a lifting apparatus for use in a vehicle according to the invention.

The invention also relates to a vehicle comprising a loading space provided with a loading space opening for loading, a door for closing the loading space opening for loading, and a lifting apparatus according to the invention.

### BACKGROUND OF THE INVENTION

A lifting platform, pivotally attached to a loading space, that is driven by a hydraulic cylinder is known in the prior art, wherein the lifting platform also forms the door of the loading space.

WO 02/066359A1 discloses a lifting apparatus with a lifting unit in the form of a piston and cylinder unit or similar drive mechanism. This lifting apparatus has multiple parts on the exterior which move relative to each other, thus increasing the risk of body parts becoming trapped when moved, i.e. when the lifting apparatus is moved up and down.

JP2004210020A discloses a lifting apparatus for placing a wheelchair in a vehicle. An up and down mechanism is mounted in a vertical guide section. The mechanism, which is connected at one point to the carrier section that can be moved up and down, comprises moving transmission chains. In this lifting apparatus the drive motor is mounted on the exterior of the guide section. As a result, the lift unnecessarily uses too much space.

A further drawback of the known lifting apparatusses for use in a vehicle is that integration with the vehicle is relatively cumbersome and awkward to achieve. In addition, such arrangements take up a lot of space unnecessarily when placed in the loading space of a vehicle.

### SUMMARY OF THE INVENTION

The object of the invention is to provide an improved lifting apparatus for use in a vehicle.

According to the invention, this objective is achieved by a lifting apparatus having the features described in claim 1. Advantageous embodiments and further embodiments of the invention can be achieved by applying the features disclosed in the subsequent claims.

The invention provides a lifting apparatus for a transport vehicle used to lift a load to the height of a loading space of a vehicle, wherein the vehicle comprises a guide section with a longitudinal axis, a carrier section that is movable within the guide section, a displacement unit arranged for vertically displacing the carrier section in the guide section, and a positioning surface connected to a lower end of the carrier section onto which the load to be lifted can be positioned. The lifting apparatus for use in a vehicle is **characterised in that** the displacement unit is positioned inside of the guide section and connected to an upper end of the carrier section. The upper end is located opposite the lower end. Furthermore, the guide section is provided with a rack of a rack-and-pinion arrangement that engages with the displacement unit for moving the displacement unit in the guide section.

This construction of the lifting apparatus provides for a compact lifting apparatus for use in a vehicle which has the added advantage that it has fewer mutually related moving parts that can be approached from the exterior, thus reducing the risk of body parts becoming accidentally trapped.

In one embodiment, the lifting apparatus further comprises a force compensator which exerts a force on the carrier section, essentially in the direction of the longitudinal axis thereof in order to support at least a portion of the weight load. In this manner, an advantageous ratio can be achieved between available lifting capacity and the space required for its integration.

In one embodiment of the lifting apparatus according to the invention, the displacement unit comprises an electrical drive mechanism that engages with the rack of a rack-and-pinion arrangement in order for the displacement unit to be moved along the longitudinal axis of the guide section. The application of an electrical drive mechanism enables the drive mechanism to be fully incorporated within the guide section, thus further reducing the space required for integration.

In one embodiment of the lifting apparatus according to the invention, the electrical drive mechanism comprises an electromotor.

In one embodiment of the lifting apparatus according to the invention, the electrical drive mechanism comprises a worm gear transmission. This transmission means is compact and provides the drive arrangement with an advantageous self-braking feature.

In one embodiment of the lifting apparatus according to the invention, the power compensator is integrated within the guide section.

In one embodiment of the lifting apparatus according to the invention, the power compensator comprises a gas spring.

In one embodiment of the lifting apparatus according to the invention, the power compensator is connected to the carrier section by means of the displacement unit.

In one embodiment of the lifting apparatus according to the invention, the displacement unit comprises a carrier, provided with at least a latch stop that engages with a drive rod connected to the carrier section in order to lift the carrier section or to allow it to be lowered along the main axis.

In one embodiment of the lifting apparatus according to the invention, the carrier section is slidably connected along the longitudinal axis by bearing means to the guide section that is provided with a rack of a rack-and-pinion arrangement and which carrier section is at least partially integrated in the guide section.

In one embodiment of the lifting apparatus according to the invention, the bearing means provide a torsionally rigid connection of the carrier section with the guide section, as regards torsion along the longitudinal axis.

In one embodiment of the lifting apparatus according to the invention, the bearing means comprise bearing rollers.

In one embodiment of the lifting apparatus according to the invention, at least one bearing means is connected by a spacer to the carrier section in order for the bearing means to be moved to a furthermost opposing side of the guide section.

In one embodiment of the lifting apparatus according to the invention, the operating bar comprises the spacer.

In one embodiment of the lifting apparatus according to the invention, the positioning surface is pivotally mounted to the carrier section and the positioning surface can be tilted between a bearing position substantially perpendicular to the longitudinal axis and an idle position or transport position in a plane parallel to the longitudinal axis.

In one embodiment of the lifting apparatus according to the invention, the ends of the guide section are provided with an attachment section to attach the lifting apparatus to a loading space of a vehicle, for example, wherein the mounting section is suitable to movably connect the lifting apparatus to the vehicle and the lifting apparatus can be moved between a transport position and a lifting position.

In one embodiment of the lifting apparatus according to the invention, the mounting section is suitable to pivotally connect the lifting apparatus to the vehicle. The lifting apparatus is preferably pivotable around a substantially vertical axis.

In one embodiment of the lifting apparatus, the slide out unit is suitable for translationally connecting the guide section to the vehicle. As a result, the lifting apparatus requires very little loading space and can be easily moved outwards.

In a further embodiment, the slide out unit comprises a fixed frame and a movable frame, wherein the fixed frame is arranged to connect the lifting apparatus to the vehicle, and the guide section is connected to the movable frame. In one advantageous embodiment, the movable frame comprises a horizontal section that is provided with at least two guide wheels for guiding the movable frame along the fixed frame, wherein the fixed frame has an upper rail along which the guide wheels run. This prevents the lifting apparatus of the vehicle from tilting. In a further embodiment the upper rail is provided with a cushioning element, wherein one of the two runners lies against the cushioning element during a lifting operation. As a result, when vertical shock movements occur, the torsional forces exerted on the guide section/movable frame are distributed across the height of the movable frame.

In one embodiment, the slide out unit has an slide out mechanism with a handle for manually moving the fixed frame in relation to the movable frame, wherein the slide out mechanism is arranged to convert a substantially vertical movement of the handle into a horizontal movement of the movable frame. This results in an operating means which requires no additional motor for the horizontal movement of the positioning surface in relation to the loading space.

In a further embodiment, the hand grip has the same end position in both the lifting position and transport position, and in this position the position of the movable frame is fixed in relation to the fixed frame by the slide out mechanism. The embodiment has the advantage that no additional steps are required in order to fix the movable frame in position, which benefits the safety of the lifting apparatus.

In one embodiment of the lifting apparatus according to the invention, the guide section and the carrier section are tubular sections in order to ensure the torsional rigidity of the load to be lifted and to prevent movement of the load around the longitudinal axis.

The invention further relates to an extruded profile, made suitable and intended as a guide section for a lifting apparatus according to the invention.

The invention further relates to a vehicle comprising a loading space with a loading space opening for loading, a door for closing the loading space opening, and a lifting apparatus according to the invention which can be fully integrated in the loading space. The lifting apparatus is preferably tiltable around the main axis between a transport position in the loading space and a lifting position wherein at least the carrier section is on the exterior of the loading space. The guide section preferably defines at least a portion of the loading space opening.

It will be apparent that the various aspects and features disclosed herein may be applied conjunctively and that each feature may be considered as being individually eligible for a divisional patent application.

### BRIEF DESCRIPTION OF THE FIGURES

These and other aspects, features and advantages of the invention will now be described in further detail with reference to the drawings in which the same reference numerals relate to the same or similar parts, and in which:

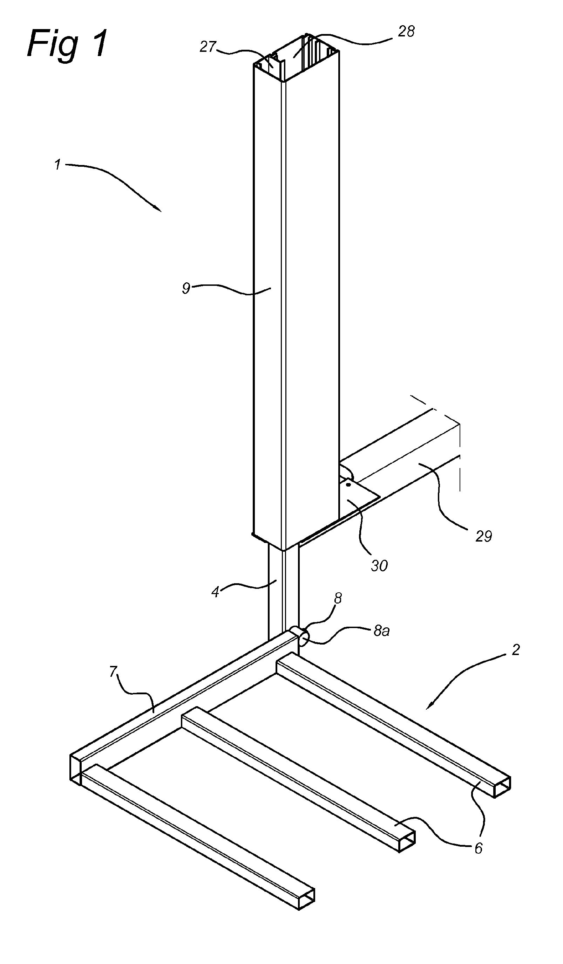

Fig. 1 shows an embodiment of the lifting apparatus in perspective view;
Fig. 2 shows a side view of a lifting apparatus with the guide section cut away;
Fig. 3 shows an enlargement of the view in fig. 2;
Fig. 4 shows an exploded view of the lifting apparatus;
Fig. 5 shows a view in perspective of an embodiment of the lifting apparatus;
Fig. 6 shows a view in perspective of an embodiment of the lifting apparatus in its lifting position;
Fig. 7 shows a side view of an embodiment of the lifting apparatus in its slide in position;
Figs. 8-10 show details from figure 7 of the upper guide arrangement between the fixed frame and movable frame;
Fig. 11 shows a side view of the embodiment of the lifting apparatus in its slide out position;
Fig. 12 shows details of figure 11 of the upper guide arrangement between the fixed frame and the movable frame; and
Fig. 13 shows a cross-section of the upper guide rails of the fixed frame.

### Description of the embodiments

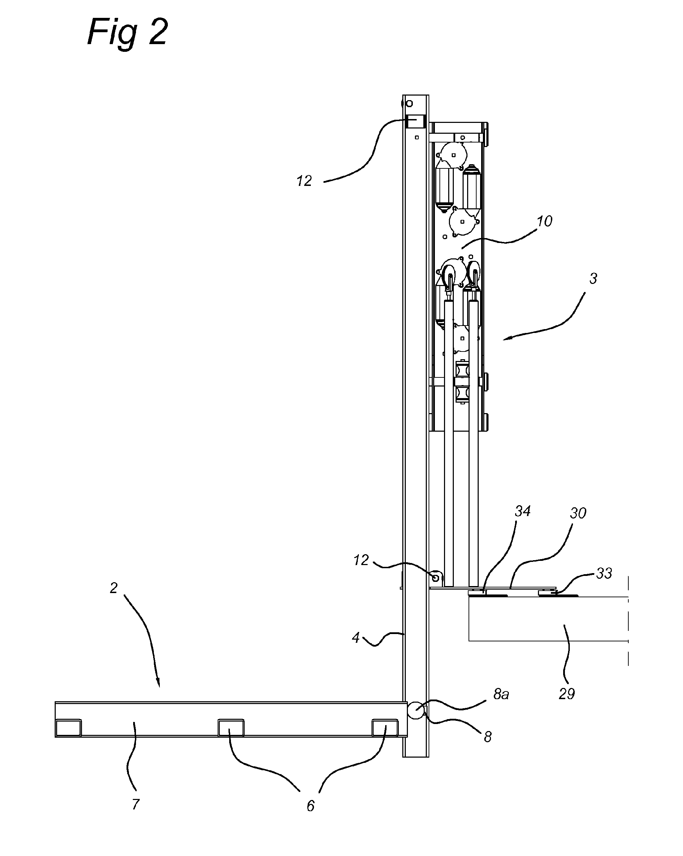

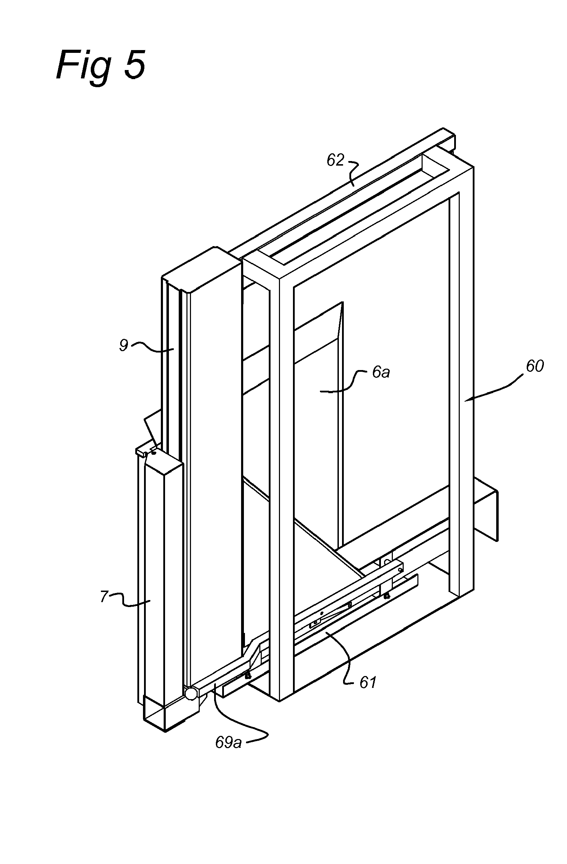

The invention relates to a lifting apparatus for a transport vehicle used to lift a load to the height of a loading space of the vehicle. Shown here, is a profile section 9 that can be attached to a vehicle and which is preferably formed as an extruded profile of aluminium. Here, the profile section 9 is pivotally mounted to a chassis beam 29 that constitutes part of the vehicle by means of a mounting plate 30. In figure 5 an embodiment is shown wherein the profile section 9 is attached to the vehicle by means of a slide out unit and can be moved in relation to the vehicle. The ends of the profile section 9 are finished off with caps (not shown). A displacement unit 10 from figure 2 is movably mounted in the profile section 9. The displacement unit 10 is movable in the longitudinal direction of the profile section 9, i.e. movable along its longitudinal axis. The displacement unit 10 is movably incorporated in a first incorporating space 28 of the profile section 9. In addition, the extruded profile 9 can be provided with a cable duct (not shown) for a spiral cable in order to supply power to the displacement unit. The cable duct is preferably formed as a fully integrated part of the extruded profile 9. In another embodiment, the guide section is provided with copper conductor strips and the displacement unit is provided with carbon brushes for supplying the required electric power.

Profile section 9 partially incorporates a carrier section 4, here with a main axis parallel to the longitudinal axis of the profile section 9. The displacement unit 4 is movably incorporated in a second incorporating space 27 of the profile section 9. The part extending from profile section 9 of the carrier section is provided at its end with a positioning surface 2 onto which a load can be placed. Here, the positioning surface 2 is defined by the support beams 6. The positioning surface 2 is preferably pivotally connected to the carrier section 4 so that the lifting apparatus 1 forms a compact system when it is not in operation. Here, a beam 6 is connected by means of an angular section 7 and a pivoting pin 8 in an incorporating space 8a for incorporating the pivoting pin which is connected to the carrier section 4. After operating the lifting apparatus 1, the positioning surface 2 is first tilted to a vertical position, after which the entire lifting apparatus 1 pivots to a position wherein the lifting apparatus is placed substantially within a loading space of a vehicle.

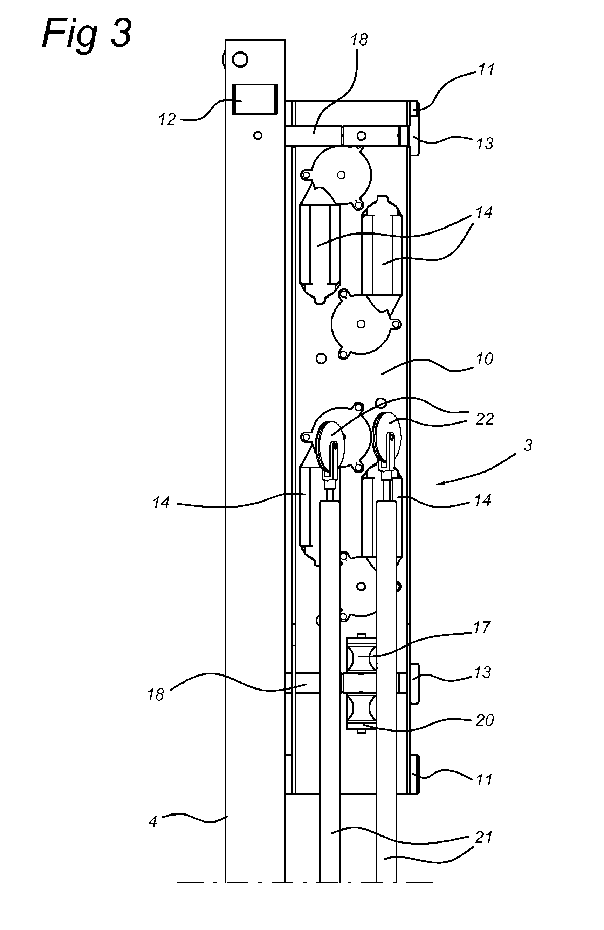

Figure 2 shows a side view of a lifting apparatus and fig. 3 shows a detail from figure 2. The carrier section 4 is supported by bearings in the profile section 9 by means of bearing rollers 12. A pair of bearing rollers are rotatably connected to the carrier section 4 by the end incorporated within the profile section 9. The outer perimeter of this pair of bearing rollers 12 is supported on the inner circumference of profile section 9. A second pair of bearing rollers 12 is rotatably connected to the profile section 9 at the end from which the support member 4 extends. In order to provide a torsionally rigid connection between the profile section 9 and the carrier section 4 with regard to the mutual rotation thereof around the main axis, further bearings 13 are provided, each of which is held in position at a distance from the carrier section 4 by means of spacers 18, 19. This results in the bearing forces being absorbed across the greatest possible distance, notably across the entire sides of the inner circumference of the profile section 9. This provides the lifting apparatus with an advantageous starting point in respect of torsional rigidity around the main axis, so that the positioning surface 2 rotates as little as possible as a result of, for example, the weight load of the load to be lifted. Here, the displacement unit 3 is independently supported on bearings in the profile section 9, i.e. independent of the bearing of the carrier section 4 in the profile section 9. To this end, the displacement unit is provided with plastic runners 11 which slide along the inside of rails in profile section 9.

Here, the profile section 9 is pivotally mounted by means of a mounting plate 30 or also fastening section 30 to for example a chassis beam 29 that constitutes part of the vehicle by hinge means 33, 34. It is conceivable that a lifting apparatus 1 pivots about a pivoting means 33 and that, whilst doing so, guides the mounting plate and holds it in position by hinge means 33. It is also conceivable to apply a hinge mechanism 33, 34 wherein the profile section 9 translates to a more complex movement in relation to the vehicle. The lifting apparatus 1 preferably pivots about a vertical axis so that it is possible, in conjunction with the compact construction of the lifting apparatus, to keep the loading space opening as freely accessible as possible, particularly when the lifting apparatus pivots to one side of the loading space opening. It is important that the lifting apparatus 1 can be pivoted to a position within the loading space of a vehicle, wherein the entire lifting apparatus 1 is preferably contained within said loading space.

The carrier section 4 is connected with a drive to the displacement unit 3 by means of the carrier 20. It is conceivable to provide the carrier 20 with a damper in order to prevent large variations in load forces from occurring between the displacement unit 3 and the carrier section 4. The carrier 20 engages with a cylindrical bar 18, in this case the spacer 18, which is rigidly connected to the carrier section 4.

The displacement unit 3 is provided with an electrical drive unit mounted to a mounting and support plate 10. The electrical drive unit comprises an electromotor 14, here with its drive axis positioned in the longitudinal direction of the profile section 9. The gears, which are arranged in the plane of the profile section 9, are driven by a right-angled transmission. These gearwheels 14 engage in the rack-and pinion arrangement 16 with the gears in that same corresponding plane. The mounting and support plate 10 here comprises an upper plate and a lower plate, between which and wherein the gearwheels 15 are supported on bearings. A spiral-shaped cable provides the drive in the displacement unit 3 with electrical power and possibly also control signals. In addition to the forces resulting from the electrical drive unit, here a force is also exerted on the displacement unit 3 as a result of the two gas springs 21. The gas springs 21 serve to support the electrical drive unit, wherein the gas springs 21 and the electrical drive unit work cooperatively in order to drive the displacement unit 3 and to move the carrier section 9 up and down. The cylinder housing of the gas spring 21 is connected to profile section 9. The piston of the gas spring 21 is connected to the displacement unit 3. Here, the force of the gas spring 21 is transferred from the piston to the displacement unit 3 by means of a pulley 22 and a cable. The cable runs from the pulley 22 and is connected at one end to the profile section 9 and to the support member 4 at the other end, here by means of spacer 18.

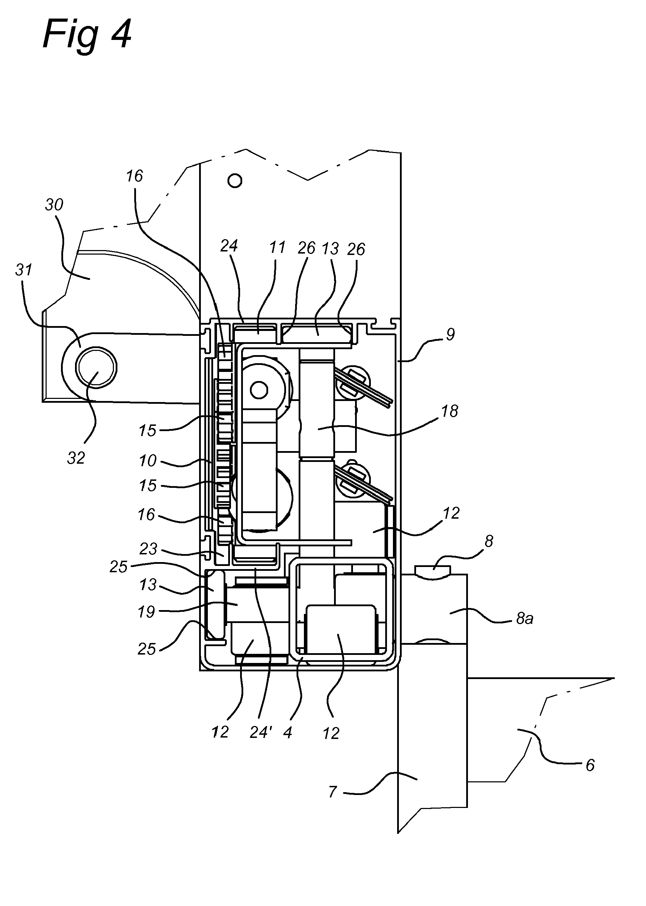

Figure 4 shows an expanded top view of a lifting apparatus. The extruded section 9 of the incorporating space 23, wherein a gear rack can be mounted, is provided with indentations which serve as a rack-and-pinion arrangement 16. This rack-and-pinion arrangement 16 can be constructed from plastic, such as nylon, and can be slidably mounted in said incorporating space 23 of the extruded profile 9.

Further to this, the extruded profile 9 is provided with guide rails 24 and 24', wherein guide ends 11 of the displacement unit 3 can run, and with bearing surfaces 25, 26 on which bearing rollers 13 run.

The profile section 9 is attached by means of a mounting lug 31 and pivoting pen 32 to the mounting and support plate 30.

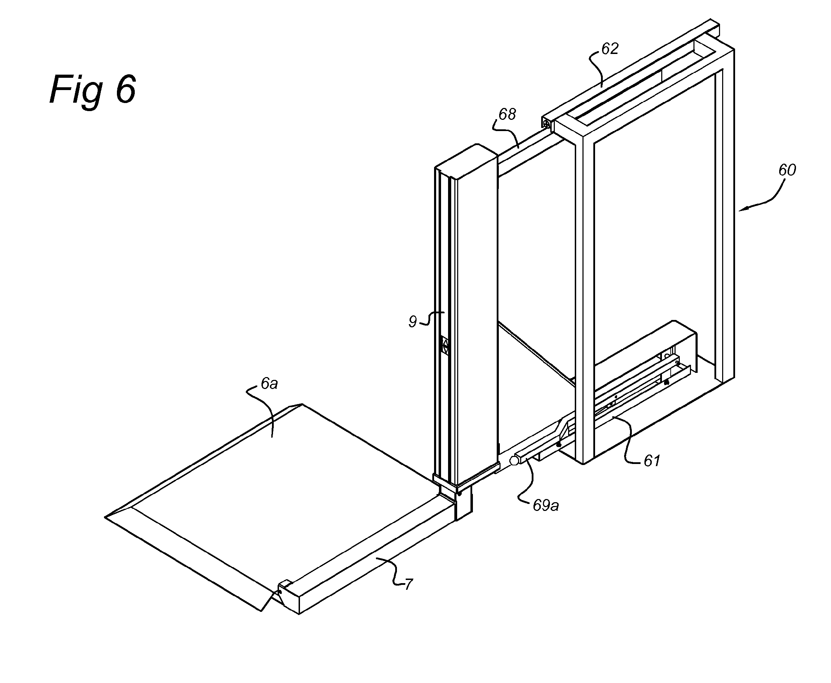

Figures 5 and 6 show a perspective view of another embodiment of the lifting apparatus according to the invention. In this embodiment, the guide section 9 is connected to an slide out unit 60 with which the carrier section can translate relative to the vehicle. The translational movement enables the guide section 9 and positioning surface, which is now provided with a closed surface 6a, for example by means of an aluminium cover plate, to be moved to a distance from the loading platform, loading space and thus from the vehicle, so that space can be created between the positioning surface and the vehicle to enable lowering. Figure 5 shows the lifting apparatus when not in use or in its transport position. In this position the slide out unit 60 is slid in. The positioning surface is also folded in. Figure 6 shows the lifting apparatus with the slide out unit 60 slid out. In its slid out position, the slide out unit is in the lifting position. In the slide in position, the lifting apparatus can be either in its transport position or inoperative position. In its inoperative position, the positioning surface is folded in and in its loading position the positioning surface 6a is folded outwards, thus enabling a load to be driven onto the loading space, for example, by means of a trolley.

The slide out unit comprises a fixed frame 61, 62 and a movable frame 68. A movable frame 68 can be moved by means of an upper rail 62 and lower rail 61 which constitute part of the fixed frame and which are permanently attached to each other by means of sectional profiles. The guide section 9 is attached to the movable frame 68. Because the upper rail 62 and the lower rail 61 are spaced at a distance from each other, the guide section is unable to tilt as a result of a weight load being placed on positioning surface 6a. The following sequence of steps must be followed in order to change between the inoperative position in figure 5 and the lifting position shown in figure 6:
1) move outwardly by means of a translation of the fixed frame and movable frame;
2) rotate the positioning surface about a first rotational axis located at the lower end of the guide section 9, whereby the first rotational axis lies perpendicular to the plane formed by the longitudinal axis of said guide section 9 and the longitudinal axis of the lower rail 61. It should be noted that the longitudinal axis of the lower rail 61 and upper rail 62 lies parallel to the displacement of the fixed frame in relation to the movable frame. After this rotation, the positioning surface is still on its side;
3) rotation of the positioning surface 6a about a second rotational axis which is also located on the lower side of the guide section, wherein the second rotational axis runs substantially parallel to the longitudinal axes of the lower rail 61 and upper rail 62.

Before a load from the vehicle can be placed on the positioning surface, the lifting apparatus first needs to be brought into the transport position by sliding in the slide out unit. To this end, the slide out unit is provided with a manually operated handle 69a.

After the load is placed on the positioning surface, the slide out unit is slided out again into the lifting position after which the positioning surface, which is attached to the underside of the carrier section, can be lowered into position by controlling the electromotors in the displacement unit.

If there is sufficient space above the lifting apparatus, then steps 1 and 2 can be executed in reverse order. The embodiment shown in figures 5 and 6 has the advantage that only very little space is required in order to extend and to retract the positioning surface. Further to this, a space in the slide out unit could be created, for example by means of a plate, wherein the positioning surface can be contained. This would prevent products in the loading space from preventing the slide out and slide in operations or even making them impossible.

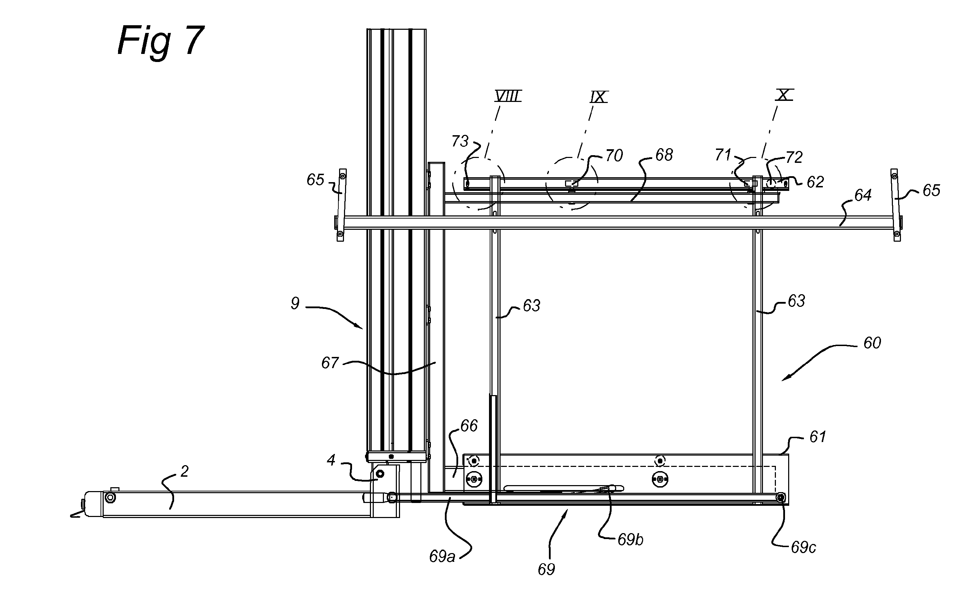

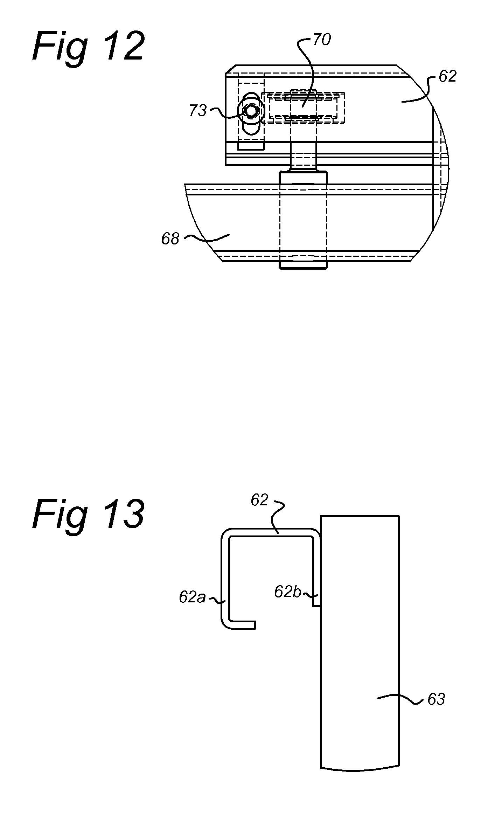

Figures 7-13 show, in more detail, an embodiment of the slide out unit 60 with which the guide section 9 is connected to a vehicle. Figure 7 shows a side-view of the lifting apparatus with the slide out unit 60 is in its slide out position and the lifting apparatus for mounting in a vehicle in its transport position.

The slide out unit 60 comprises a fixed frame consisting of the sections 61, 62, 63, 64 and 65 and a movable frame consisting of sections 66, 67 and 68. Section 61 is a lower rail provided with guide members used to move a lower beam 66 of the movable frame. Section 62 is an upper rail for guiding runners 70, 71 and 72 that are attached to an upper beam 68 of the movable frame. The lower rail 61 and upper rail 62 are rigidly connected to each other by transverse sections 63. The lower rail 66 and upper rail 68 are rigidly connected to each other by vertical beam 67. The guide section 9 is attached to vertical beam 67.

The fixed frame further comprises mounting sections 64 and 65 for mounting the displacement unit 60 to the upper side and to fixed parts of the vehicle, preferably chassis members of the roof. The lower rail 61 is further arranged to be attached to the loading floor of the vehicle. In this manner, the lifting apparatus is rigidly attached to the vehicle.

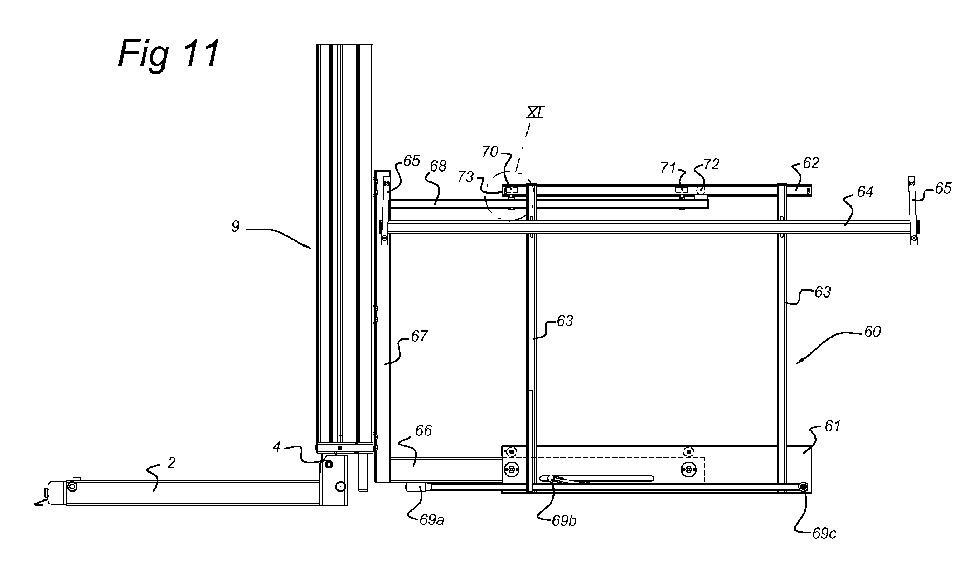

The lower rail 61 is provided with bearings so that the lower beam 66 can be moved smoothly back and forth relative to the upper rail 62. A manually operated slide out mechanism 69 is provided to move the lower beam 66 back and forth in the lower rail 61 between the slide in and slide out position. The slide out mechanism 69 comprises an operating bar 69a and transmission bar 69b. A hand grip is provided at one end of the operating bar 69a. At an opposing end 69c, the operating bar 69a is rotatably connected to the lower rail 61. The transmission lever 69b is rotatably connected at one end around a first rotatable axis to the operating rod 69a and at its opposite end the transmission bar 69b is rotatably connected around a second rotatable axis to the lower beam 66. The vertical planes through the longitudinal axes of the operating bar 69a, transmission bar 69b, lower rail 61 and lower beam 66 lie substantially parallel to each other. In its idle or end position, the operating bar 69a lies on a baseplate. In this position, the transmission bar 69b lies somewhat tilted in relation to the baseplate and the first rotatable axis is positioned above the second rotatable axis. This applies both to the slide in and slide out position of the slide out unit 60. Because the first rotatable axis lies below the second rotatable axis, the lower beam 66 is secured in position in respect of the lower rail 61. By lifting the handle of the operating rod 69a upwards, forces are transmitted via the transmission bar 69b to the lower beam 66 and the lower beam 66 is moved from its initial position to its end position. During this movement, the handle moves upwards until the lower beam reaches halfway between the starting position and end position and rests again in the idle position, after which the lower beam is then immediately secured in place in the end position. It has been found that this construction results in a smooth operation which can be performed manually without the need for a person to exert too much force in order to move the positioning surface 2 with its load between the transport position when the positioning surface 2 lies on the loading floor and the lifting position wherein the positioning surface can be moved up and down on the exterior of the vehicle. Figure 7 shows that in the slide in position, from the first point of rotation the transmission bar 69b lies substantially in the direction of the point of rotation of the operating bar 69a. Figure 11 shows that in the slide out position, from the first point of rotation the transmission bar 69b lies substantially in the direction of the hand grip end of the operating bar 69a.

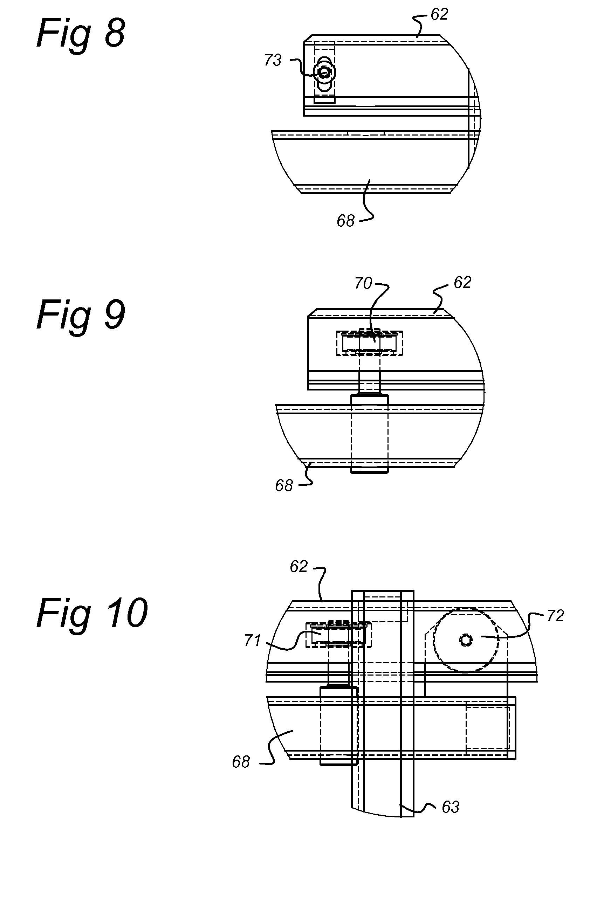

It is essential that the guide section 9 does not tilt as a result of a load being placed on the positioning surface. To prevent this from occurring, the lifting apparatus must be sufficiently rigid and be adequately attached and secured to the vehicle. A load placed on the positioning surface 2 causes torsional forces to be exerted on the underside of the carrier section 4. The upper rail 62 and upper beam 68 are arranged in order to absorb these rotational forces and to ensure the proper operation of the lifting apparatus. The figures 8, 9. 10, 12 and 13 show details of this construction. The upper beam 68 is provided with two guide wheels 70 and 71. The guide wheels 70 and 71 run along the sides 62a, 62b of the upper rail 62. The torsional forces are exerted on the bearing surface of the guide wheels 70 and 71, and because the guide wheels are supported on bearings the slide out unit can be moved smoothly back and forth, thereby reducing the amount of friction.

Guide wheel 72 is arranged in order to hold runner wheel 71 in position at a height in the upper rail 62 so that it does not run with its sides along the inner surface of the upper rail, which would otherwise adversely affect the smooth inward and outward movement thereof and cause wear on the runner wheel 71.

Additional torsional forces will occur during the lifting of loads. This is why the upper rail 62 is provided with a cushioning element 73. In the slide out position of the slide out unit 60, the guide wheel 70 lies against the cushioning element 73, as is shown in figure 11. In this manner, the torsional forces are transferred via the guide section 9, upper beam 68 and guide wheel 70 to the cushioning element 73. Because the cushioning element 73 is rigidly connected to the vehicle by the fixed frame, the cushioning element 73 is held firmly in place and the positioning surface 2 will only twist to a very little extent in relation to the lower rail 61 and thus the loading floor of the vehicle. Due to the upper rail and upper beam, the connection between the lower beam 66 and vertical intermediate beam 67 can be less rigid since fewer forces are exerted on the bearing of the lower beam 66.

It will be evident that the above description is included in order to illustrate the operation of the preferred embodiments of the invention and not to restrict the scope of the invention. Based upon the foregoing description, those skilled in the art will be readily aware of alternative embodiments which fall within the spirit and scope of the present invention.

## Claims

1. Lifting apparatus for use in a transport vehicle used to lift a load to the height of a loading space of a vehicle, said lifting apparatus (1) comprising:
- a guide section (9) with a longitudinal axis,
- a carrier section (4) that is movable within the guide section (9)
- a displacement unit (3) arranged for moving the carrier section within the guide section (9);
- a positioning surface (2) connected to a lower end of the carrier section (4) for positioning a load to be lifted, **characterised in that** the displacement unit (3) is arranged within the guide section and is connected to an upper end of the carrier section (4), wherein the upper end is positioned opposite the lower end, the guide section being provided with a rack of rack-and-pinion arrangement (16) which engages with the displacement unit (3) for moving the displacement unit (3) within the guide section (9).

2. Lifting apparatus according to claim 1, wherein the displacement unit (3) comprises an electrical drive mechanism that engages with the rack of the rack-and-pinion arrangement (16) in order for the displacement unit (3) to be moved along the longitudinal axis of the guide section (9).

3. Lifting apparatus according to any of the preceding claims, wherein the electrical drive unit comprises an electromotor.

4. Lifting apparatus according to any of the preceding claims, wherein the electrical drive unit comprises a worm gear transmission.

5. Lifting apparatus according to any of the preceding claims, wherein the carrier section (4) is slidably connected to the guide member (9) along the longitudinal axis by bearing means (11, 12, 13) and is at least partially incorporated within the guide section (9).

6. Lifting apparatus according to claim 5, wherein the bearing means (11, 12, 13) provide a torsionally rigid connection between the carrier section (4) and the guide section (9) as regards torsion along the longitudinal axis.

7. Lifting apparatus according to any of the preceding claims, wherein the positioning surface (2) is pivotally mounted to the carrier section (4) and said positioning surface (2) can be tilted between a bearing position, substantially perpendicular to the longitudinal axis, and an inoperative position in a plane parallel to the longitudinal axis.

8. Lifting apparatus according to any of the preceding claims, **characterised in that** said lifting apparatus is further provided with an slide out unit, wherein the guide section (9) is attached to the slide out unit in order to mount said lifting apparatus in, for example, a loading space of a vehicle and wherein said slide out unit is suitable to movably connect said lifting apparatus to the vehicle and wherein said lifting apparatus can be moved between a transport position and a lifting position.

9. Lifting apparatus according to claim 8, wherein the slide out unit is arranged to pivotally connect the guide section (9) to the vehicle.

10. Lifting apparatus according to claim 8, wherein the slide out unit is suitable to translationally connect the guide section (9) to the vehicle.

11. Lifting apparatus according to claim 10, **characterised in that** the slide out unit comprises a fixed frame (60) and a movable frame (66, 67, 68), wherein the fixed frame (60) is arranged to connect said lifting apparatus to the vehicle, and the guide section (9) is connected to the movable frame (66, 67, 68).

12. Lifting apparatus according to claim 11, **characterised in that** the movable frame (66, 67, 68) comprises a horizontal section (68) that is provided with at least two guide wheels (70, 71) for guiding the movable frame along the fixed frame (60), wherein the fixed frame (60) has an upper rail (62) along which the guide wheels (70, 71) run.

13. Lifting apparatus according to claim 12, **characterised in that** the upper rail (62) is provided with a cushioning element (73), wherein one of the two runners lies against the cushioning element (73) during a lifting operation.

14. Lifting apparatus according to any of the claims 10 - 13, **characterised in that** the slide out unit has an slide out mechanism (69) with a handle (69a) for manually moving the fixed frame in relation to the movable frame, wherein the slide out mechanism is arranged to convert a substantially vertical movement of the handle into a horizontal movement of the movable frame.

15. Lifting apparatus according to claim 14, **characterised in that** the hand grip (69a) has the same end position in both the lifting position and transport position, and that in this position the position of the movable frame is fixed in relation to the fixed frame.
